# EUROPÄISCHE PATENTANMELDUNG

(11) **EP 1 767 922 A2**
(43) Veröffentlichungstag der Anmeldung: **28.03.2007**
(21) Anmeldenummer: 06026556.8
(22) Anmeldetag: 23.01.2004
(51) Int. Cl.: G01N 21/05, G01N 21/15

(54) **Verfahren zum Betrieb einer Messküvette für ein Fotometer**

(30) Priorität: 16.04.2003 DE 10317495
(62) Teilanmeldung aus: 04001423.5
(71) Anmelder: ABB PATENT GmbH, 68526 Ladenburg (DE)
(72) Erfinder: Die Erfindernennung liegt noch nicht vor
(74) Vertreter: Schmidt, Karl Michael

(57) **Zusammenfassung**

Die Erfindung betrifft ein Verfahren zum Betrieb einer Meßküvette zur Bestimmung der Strahlungsabsorption in einem Fotometer mit zwei strahlungsdurchlässigen Fenstern sowie Gaseingang und Gasausgang, gemäß Oberbegriff des Patentanspruches 1. Um hierbei zu erreichen, daß bei der Verwendung verschmutzungsträchtiger Messgase der Effekt des Niederschlages der Messgasverunreinigungen auf den Küvettenfenstern erheblich reduziert wird, und die Küvette ausserdem von aussen reinigbar ist ohne diese öffnen zu müssen, ist erfindungsgemäß vorgeschlagen, dass die Meßgasküvette (MK) in Gebrauchslage horizontal angeordnet ist und zwei Gasausgänge in der Nähe der Fenster aufweist, und dass der Gaseingang zwischen den Gasausgängen angeordnet ist, derart dass das Messgas mittig in die Messküvette einströmt und sich in zwei Teilströme in entgegengesetzter Richtung aufteilt, und die Gasausgänge so orientiert sind, dass Kondensat nach unten ablaufen kann.

## Beschreibung

Die Erfindung betrifft ein Verfahren zum Betrieb einer Meßküvette für ein Fotometer, gemäß Oberbegriff der Patentansprüche 1 und 2.

Bei Fotometern handelt es sich um Spektrometer, bei denen Strahlung mit der oder den zu messenden Medien in Wechselwirkung treten. Dabei wird Licht von einer bekannten Strahlungsquelle ausgesendet und durch eine sogenannte Meßküvette geleitet. Am gegenüberliegenden Ende ist ein Detektor angeordnet. Innerhalb der Meßküvette befindet sich das Meßgas, welches zur Analyse hindurchgeleitet wird. Im allgemeinen wird auf der Basis der Absorptionsspektroskopie gearbeitet, bei der charakteristische Strahlungsbanden, die energetisch im Licht, d.h. im primären Licht der Strahlungsquelle enthalten sind, innerhalb des Meßgases von den entsprechenden Molekülen der zu messenden Meßgaskomponente absorbiert werden. Je nach dem charakteristischen Selektivierungsverfahren oder dem verwendeten Wellenlängenbereich unterscheidet man beispielsweise das nichtdispersive Verfahren für den infraroten (NDIR) oder UV (NDUV) Strahlungsbereich. Ein weiteres Verfahren ist die UV-Resonanz Absorptions Spektrokopie (UV-RAS).

Die Strahlungsabsorption als solche ist dabei ein Maß für die Konzentration des die Absorption bewerkstelligenden Gases bzw. der entsprechenden Gaskomponente. Hierzu läßt man das Meßgas durch eine Meßküvette in diesem Falle von definierter Länge durchströmen, wobei an den Endseiten der zumeist rohrförmigen Küvette optisch durchlässige Fenster angeordnet sind. Die optische Durchlässigkeit dieser Fenster bemißt sich dabei an den zu erfassenden Strahlungsbanden, für die die entsprechenden Küvettenfenster optisch durchlässig sein müssen.

Üblicherweise haben Meßküvetten bekannter Bauart zwei Fenster. Dabei ist ein Fenster am Gaseingang und ein Fenster am Gasausgang. Mit anderen Worten heißt dies, daß die Meßküvette der gesamten Länge nach durchströmt wird und sich die Meßgasein- und Meßgasausgänge somit in direkter Nachbarschaft zu den Fenstern befinden. Dies ist zwar vorteilhaft für eine definierte Durchströmung der Küvette, erweist sich aber als Nachteil hinsichtlich der Verschmutzungsgefährdung der Fenster, wenn entsprechende Gase mit Verunreinigungen belastet sind. Die besagten Verunreinigungen schlagen sich dabei auf den Fenstern nieder und verfälschen das Meßergebnis durch die dadurch bewirkte Extentionswirkung der Strahlung ganz erheblich. Dies tritt besonders bei UV-Fotometern auf, weil hier die Strahlung im allgemeinen stärker als im IR-Bereich je nach Wellenlänge gestreut wird.

Aus der DE 100 57 652 A1 geht ein Verfahren zur Messung der Opazität in Gasen hervor. In diesem Verfahren wird jedoch keine Gasanalyse vorgenommen, sondern lediglich der Anteil von Schwebstoffen, durch eine dadurch bewirkte Veränderung der Opazität des Gases über eine optische Messstrecke ermittelt. Dabei wird das Gas auch mittig in eine Messstrecke eingeleitet und symmetrisch an beiden Enden wieder abgesaugt. Eine Gasanalyse als solche findet hierbei definitiv nicht statt.

Aus US 4377001 ist ebenfalls ein Verfahren und eine Einrichtung bekannt, bei der zur Kondensationsvermeidung an den Enden einer Küvette eine Beheizung derselben in abgeschlossenen Vorküvetten vorgenommen wird. Da diese Küvetten abgeschlossen sind, ist eine Alterung derselben über die Zeit unvermeidbar, vor allen Dingen schon daher, weil diese abgeschlossenen Vorküvetten beheizt und damit thermischen Spannungen unterworfen werden.

Der Erfindung liegt daher die Aufgabe zugrunde, bei der Verwendung verschmutzungsträchtiger Meßgase den Effekt des Niederschlages der Meßgasverunreinigungen auf den Küvettenfenstern erheblich zu reduzieren, und die Küvette ausserdem von aussen reinigbar ist ohne diese öffnen zu müssen.

Im Hinblick auf eine Verfahren der gattungsgemäßen Art, zum Betrieb einer Meßküvette für ein Fotometer, bei welchem Messgas durch die Meßküvette zwischen Messgaseingang und Messgasausgang hindurchgeleitet wird, besteht der Kern der Erfindung darin, dass die Meßküvette zur Beaufschlagung mit kondensatreichem Messgas temperaturgeregelt wird, derart, dass die Küvettentemperatur oberhalb des Wassertaupunktes eingestellt wird.

In Verbindung damit oder auch für sich alleine stehend ist auch vorgesehen, und damit erfindungsgemäß dass die Meßküvette zur Beaufschlagung mit kondensatreichem Messgas temperaturgeregelt wird, derart, dass die Küvettentemperatur unterhalb des Säuretaupunktes der als Kondensat vorliegenden Säure eingestellt wird.

In vorteilhafter Ausgestaltung kann ausgestaltet werden, dass die besagte Temperatureinstellung zumindest im Bereich des Messgasausganges erfolgt.

Praktische Versuche haben hierbei gezeigt, daß die erfindungsgemäße Küvette im Vergleich zu einer bekannten Küvette, bei der der Meßgaseingang nahe einem der Küvettenfenster und der Meßgasausgang am anderen Küvettenfenster angeordnet ist, und die Küvette auf diese Weise somit lediglich in einer Richtung durchströmt wird, die erfindungsgemäße Küvette mit der geteilten Durchströmung über eine entsprechende Beobachtungszeit hin eine signifikant kleinere Verschmutzung der Küvettenfenster, als bei einer Küvette der herkömmlichen Bauart bewirkt.

Im Hinblick auf das erfindungsgemäße Verfahren zum Betrieb einer solchen Messküvette ist angegeben, dass die Meßküvette zur Beaufschlagung mit kondensatreichem Messgas temperaturgeregelt wird, derart, dass die Küvettentemperatur oberhalb des Feuchtetaupunktes eingestellt wird.

Eine weitere Möglichkeit entweder für sich betrachtet oder in Verbindung mit der obigen Verfahrensmassnahme ist, dass die Messküvette zur Beaufschlagung mit Kondensatreichem Messgas temperaturgeregelt wird, derart, dass die Küvettentemperatur unterhalb des Säuretaupunktes der als Kondensat vorliegenden Säure eingestellt wird.

Es ist aber auch möglich, dass die Temperatur der Messküvette oberhalb des Feuchtetaupunktes und oberhalb des Säuretaupunktes eingestellt wird.

Es hat sich hernach gezeigt, daß bei verschmutzungsbelasteten Meßgasen die Verschmutzungen im wesentlichen im Bereich des Meßgaseinganges ablagern. Befände sich also wie bei bekannten Küvetten der Meßgaseingang nahe einer der beiden Küvettenfenster, so würde natürlich dieses stark verschmutzt. Bei der Küvette der erfindungsgemäßen Bauform ist der Meßeingang mittig, innerhalb des Rohrbereiches, wobei sich die Verschmutzungen dort im Rohr, im allgemeinen gegenüber dem Gaseingang, ablagern, und die Fenster von den Ablagerungen frei bleibt. Selbst obwohl dort die Meßgasausgänge plaziert sind, lagern sich dort über lange Zeit hin keine Verschmutzungen ab.

Damit ist mit einer Meßküvette der erfindungsgemäßen Art die gestellte Aufgabe auf einfache, aber sehr wirkungsvolle Weise gelöst.

Das System lässt somit bewusst Säurekondensat in der Messküvette zu.

Teilchen, Kondensat Aerosole etc konglomerieren am Boden der Messküvette nahe dem Messgasausgang und können durch die erfindungsgemäße Konstruktion dort ablaufen.

Die Erfindung ist in der Zeichnung dargestellt und nachfolgend näher beschrieben.

Es zeigt:
- Figur 1:: Messküvette mit einem Gasseingang und einem Gasausgang.
- Figur 2:: Messküvette mit Spülgasvorhängen.

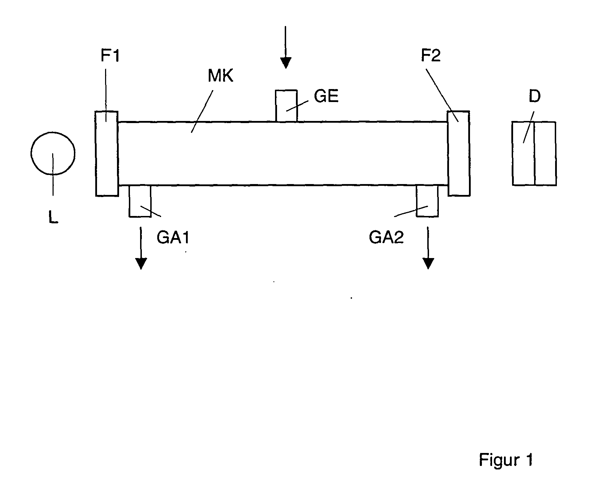

Figur 1 zeigt eine Strahlungsquelle L , die linksseitig einer mittig angeordneten meßgasdurchströmten Meßküvette MK plaziert ist. Die Meßgasküvette MK ist dabei auf der Strahlungsquellenseite mit einem Fenster F1 und auf der dem Detektor D zugewandten Seite mit einem Fenster F2 verschlossen. Die beiden Fenster sind für die für die Messung wesentlichen Strahlungsbanden und Energiebereiche optisch durchlässig. Extinktionsverluste durch die Fenster werden dabei durch eine Kalibrierung eliminiert.

In erfindungsgemäßer Weise befindet sich der Meßgaseingang nunmehr nicht mehr nahe einem der beiden Fenster F1 oder F2, sondern in diesem Falle weitestgehend mittig, das heißt mit großem und jeweils gleichem Abstand zum Fenster F1 und F2.

Dieser Meßgaseingang GE kann dabei schmutzbefrachtetes Meßgas in die Meßküvette einbringen. Dieses lagert sich, wie gemäß grundlegender Erkenntnis zur erfindungsgemäßen Küvette auch erwiesen wurde, nahe dem Bereich des Meßgaseinganges innerhalb des Rohres der Meßküvette MK ab. Da der Meßgaseingang GE nunmehr aber mittig im Rohr angeordnet ist, sind die Ablagerungsbereiche innerhalb der rohrförmigen Meßküvette MK nunmehr weit von den Fenstern entfernt und die Gasschmutzpartikel lagern sich auf der Wandung des Rohres ab, wo sie keinen optischen Einfluß auf die Messung haben. Die Meßgasausgänge GA1 und GA2 befinden sich auf der gegenüberliegenden Seite des Rohres, jedoch nahe den Fenstern F1 und F2. Im Bereich der Gasausgänge GA1 und GA2 finden keine nennenswerten Ablagerungen der Verschmutzungsfracht des Meßgases statt.

Somit ist die gesamte Küvette verschmutzungstoleranter, und sie ist über deutlich längere Meßperioden hin somit im Ergebnis wesentlich genauer.

Die erfindungsgemäße Meßküvette läßt sich in vorteilhafter Weise bei allen Fotometern insbesondere bei NDIR-Fotometern und vor allem bei UV-Fotometern insbesondere dem UV-RAS-Verfahren vorteilhaft einsetzen.

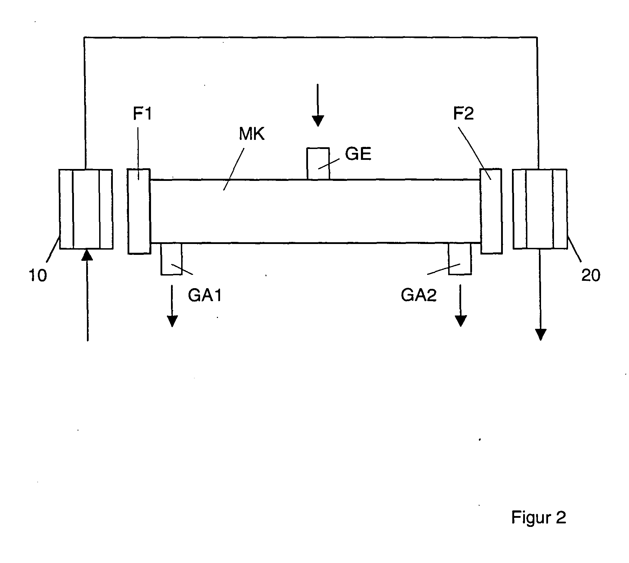

Figur 2 zeigt ein Ausführungsbeispiel mit sogenannten Spülvorhängen 10 und 20. Diese Spülvorhänge sind quasi wiederum kleine Küvetten die inertgas- oder luftgespült werden und beidseitig mit optisch durchgängigen Fenstern versehen sind. Die optische Durchgängigkeit bezieht sich dabei auf die für die Messung jeweils benötigte Durchlässigkeit in bestimmten Wellenlängenbereichen. Diese Spülvorhänge sind strömungstechnisch miteinander verbunden, und werden so von einem Pumpsystem beaufschlagt. Bei Betrieb mit Unterdruck werden die Küvettenfenster F1 und F2 vor Abkühlung geschützt und gleichzeitig kann Messgas, dass durch Undichtigkeiten der über Dichtungen mit der Spülkammer sonst in das Messgerät strömt, nach aussen geleitet werden. Über vorgewärmtes Spülgas können die Messküvettenfenster auch indirekt thermisch geregelt werden.

## Patentansprüche

1. Verfahren zum Betrieb einer Meßküvette für ein Fotometer, bei welchem Messgas durch die Meßküvette zwischen Messgaseingang und Messgasausgang hindurchgeleitet wird,
**dadurch gekennzeichnet,**
**dass** die Meßküvette zur Beaufschlagung mit kondensatreichem Messgas temperaturgeregelt wird, derart, dass die Küvettentemperatur oberhalb des Feuchtetaupunktes eingestellt wird.

2. Verfahren zum Betrieb einer Meßküvette für ein Fotometer, bei welchem Messgas durch die Meßküvette zwischen Messgaseingang und Messgasausgang hindurchgeleitet wird, insbesondere nach Anspruch 1,
**dadurch gekennzeichnet,**
**dass** die Meßküvette zur Beaufschlagung mit kondensatreichem Messgas temperaturgeregelt wird, derart, dass die Küvettentemperatur unterhalb des Säuretaupunktes der als Kondensat vorliegenden Säure eingestellt wird.

3. Verfahren zum Betrieb einer Meßküvette für ein Fotometer, bei welchem Messgas durch die Meßküvette zwischen Messgaseingang und Messgasausgang hindurchgeleitet wird, insbesondere nach Anspruch 1 oder 2,
**dadurch gekennzeichnet,**
**dass** die Temperatur der Messküvette oberhalb des Feuchtetaupunktes und oberhalb des Säuretaupunktes eingestellt wird.

4. Verfahren nach einem der vorhergehenden Ansprüche 1 bis 3,
**dadurch gekennzeichnet,**
**dass** die Gasvolumen der Spülvorhänge (10, 20) mit Unterdruck betrieben werden.

5. Verfahren nach einem der vorhergehenden Ansprüche 1 bis 3,
**dadurch gekennzeichnet,**
**dass** die Spülkammer d.h. die Spülvorhänge (10, 20) bzw die Küvettenfenster mit vorgewärmtem und thermostatiertem Spülgas beheizt werden.

6. Verfahren nach einem der vorhergehenden Ansprüche 1 bis 3,
**dadurch gekennzeichnet,**
**dass** die Temperatur oberhalb des Säuretaupunktes eingestellt wird.
